# EUROPEAN PATENT APPLICATION

(11) **EP 2 259 399 A2**
(43) Date of publication of application: **08.12.2010**
(21) Application number: 10164504.2
(22) Date of filing: 31.05.2010
(51) Int. Cl.: H02G 3/08, H02G 15/007

(54) **Junction box and mould for manufacturing such a junction box**

(30) Priority: 02.06.2009 DE 202009007766 U
(71) Applicant: Alrack B.V., 5504 PA Vedhoven (NL)
(72) Inventor: Trimpe, Cornelis Johannes, 5506 BH, Veldhoven (NL)
(74) Representative: Eveleens Maarse, Pieter

(57) **Abstract**

The invention relates to a junction box for enclosing an electrically conductive connection of at least one connecting cable to electrical connecting means present in the housing, comprising: a housing provided with at least one passage opening for passage of the connecting cable into the interior of the housing and an access opening for providing access to the interior of the housing for the purpose of connecting the at least one connecting cable to the connecting means, **characterized in that** the device comprises at least one clamping element which is adapted, when placed on the part of the at least one connecting cable extending inside the junction box, to absorb tensile forces exerted on the part of this connecting cable situated outside the junction box.

## Description

The invention relates to a junction box for enclosing an electrically conductive connection of at least one connecting cable to connecting means forming part of an electrical device. The invention also relates to a mould for manufacturing such a junction box.

A known junction box for enclosing an electrically conductive connection of at least one connecting cable to connecting means forming part of an electrical device usually comprises a housing with at least one passage opening for passage of the connecting cable into the interior of the housing and an access opening for providing access to the interior of the housing for the purpose of connecting the at least one connecting cable to the connecting means.

During the connection of the connecting cable to the connecting means, but also later during use of the electrical device, there is a danger of the connection between the connecting cable and the connecting means being broken by a tensile force being exerted on the connecting cable. This causes malfunction.

The object of the invention is to provide a junction box of the above stated type for enclosing an electrically conductive connection of at least one connecting cable to connecting means forming part of an electrical device with an improved reliability.

This object is achieved with the junction box of the above elucidated type, wherein the device comprises a clamping element which is adapted, when placed on the part of the connecting cable situated inside the junction box, to absorb tensile force exerted on the part of this connecting cable situated outside the junction box. A force on the connecting cable can be absorbed by applying a clamping element situated in the junction box, wherein there is a smaller chance of the connection being broken than in the known junction box.

The clamping element can be embodied in diverse ways. The clamping element can thus comprise a ring which is placed round the connecting cable and subsequently clamped onto the connecting cable using connecting means, such as a bolt extending to the connecting cable through a radially extending opening arranged in the ring and provided with screw thread.

The clamping elements particularly comprise a non-enclosed opening for clamping attachment to the connecting cable. Because the connecting cable is received under bias in the non-enclosed opening, a good connection is obtained between clamping element and connecting cable and, when an outward directed force is exerted on the connecting cable, it will be displaced in the interior of the junction box until the clamping element comes up against the housing of the junction box, and further displacement of the connecting cable is prevented.

In a practical embodiment the non-enclosed opening comprises a portion with a width smaller than the diameter of the connecting cable. By receiving the connecting cable in the portion of the non-enclosed opening with a width smaller than the diameter of the connecting cable, the connecting cable can be clampingly received under bias in the non-enclosed opening in simple manner. The body can here be manufactured from a stiff material, wherein the bias is obtained by elasticity of an elastically embodied sheath of the connecting cable. The body can also be manufactured from a flexible material, wherein by means of the shaping the flexibility of the body, and particularly the immediate vicinity of the non-enclosed opening, can also be modified.

In an advantageous embodiment the non-enclosed opening comprises close to an edge of the body a portion with a width greater than the diameter of the connecting cable. This facilitates the placing of the connecting cable in the non-enclosed opening.

According to another preferred embodiment, the thickness of the edge adjacent to the opening is smaller than that of the other part of the clamping element, whereby the clamping force is concentrated on a smaller surface area.

According to a specific preferred embodiment, the at least one clamping element can be coupled to the inner side of the wall of the junction box. By placing the clamping element in the receiving space the tensile forces exerted on the connecting cable can be easily transmitted to the housing. Another advantage is that the clamping means are limited in their movement, whereby no moving parts are present inside the housing, this improving the reliable operation of the junction box.

The at least one clamping element can more particularly be connected to the wall by means of a form-locking connection which can be fixed by a movement of the clamping element substantially parallel to the wall of the junction box, whereby an even better coupling is obtained between clamping element and the wall of the housing.

Although other structural forms are not precluded, a specific embodiment provides the measure that the clamping element is provided on two opposite sides with tongues which can be engaged by grooves arranged in the wall or in parts connected thereto on either side of the at least one passage opening and extending parallel to each other. Owing to this measure it is possible to clamp the clamping element onto the connecting cable and couple it to the wall of the housing in a single movement, so that the number of operations is limited. The operation is simplified further when the grooves extend perpendicularly of the edge of the wall adjacent to the access opening, so that this operation can be performed in simple manner from the access opening.

An embodiment with many applications provides the measure that the junction box is provided with two passage openings, and that the connecting means form part of a circuit which is arranged in the interior of the housing and which is adapted for connection by the connecting means to two connecting cables.

Another application is obtained when the junction box is provided with a connecting opening arranged opposite the access opening, and the box is adapted for placing with its connecting opening on an electrical apparatus.

Yet another application results when the junction box is provided with contact means for connecting the electrical circuit to contacts arranged on the electrical apparatus and comprises fixation means for fixing the junction box to the electrical apparatus, or when the junction box is adapted for placing on a photovoltaic panel.

Although forming of the housing by thermal deforming of plastic, such as thermoforming, or bending of plastic is not precluded, it is attractive for the housing to be manufactured substantially from a plastic which can be moulded or pressed.

This latter embodiment also provides the option of the at least one clamping element being formed integrally with the housing. This results in a simple and inexpensive method of manufacturing the clamping element and the junction box, as well as an unambiguous location in which the clamping element is situated. The clamping element is immediately available to a user without the risk of the clamping means being lost. The clamping means can remain connected to the housing during their operation, although the connection of the clamping element integrally connected to the housing can also be broken in simple manner at the moment the clamping means have to be used.

The overall size of the mould for manufacturing the housing is not increased when the at least one clamping element is formed on the inner side of the housing.

The invention also relates to a mould adapted to manufacture a junction box according to any of the foregoing claims, wherein the mould comprises recesses for receiving mouldable material for the purpose of forming the housing and the clamping means.

The present invention will be further elucidated on the basis of the non-limitative exemplary embodiments shown in the following figures. Herein:
figure 1a shows a perspective bottom view of a junction box according to the invention;
figure 1b shows a perspective top view of the junction box of figure 1a, wherein a connecting cable has been passed through first openings of the junction box;
figure 1c shows a perspective top view of a junction box of figure 1b, wherein clamping means are placed round the connecting cable;
figure 2 shows a bottom view of the junction box of figure 1a;
figure 3 shows a perspective view of the clamping bodies according to the invention; and
figure 4 shows a perspective view of a junction box according to the invention connected to an electrical device, wherein the openings of the junction box are closed.

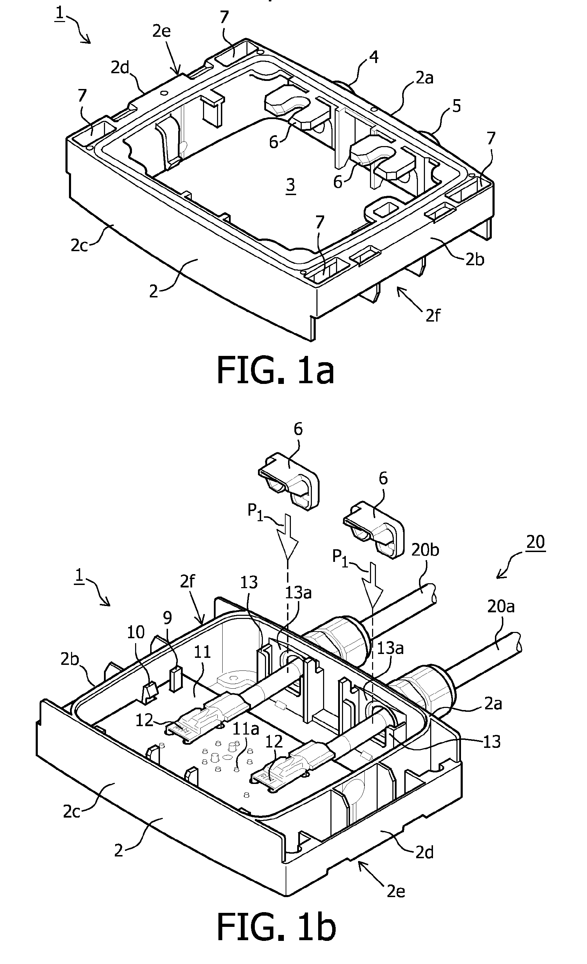

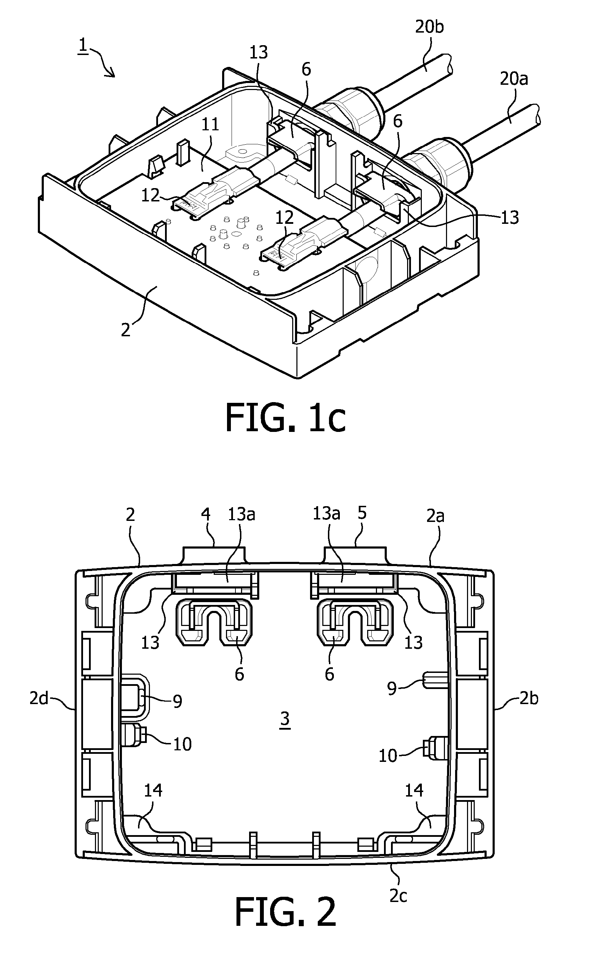

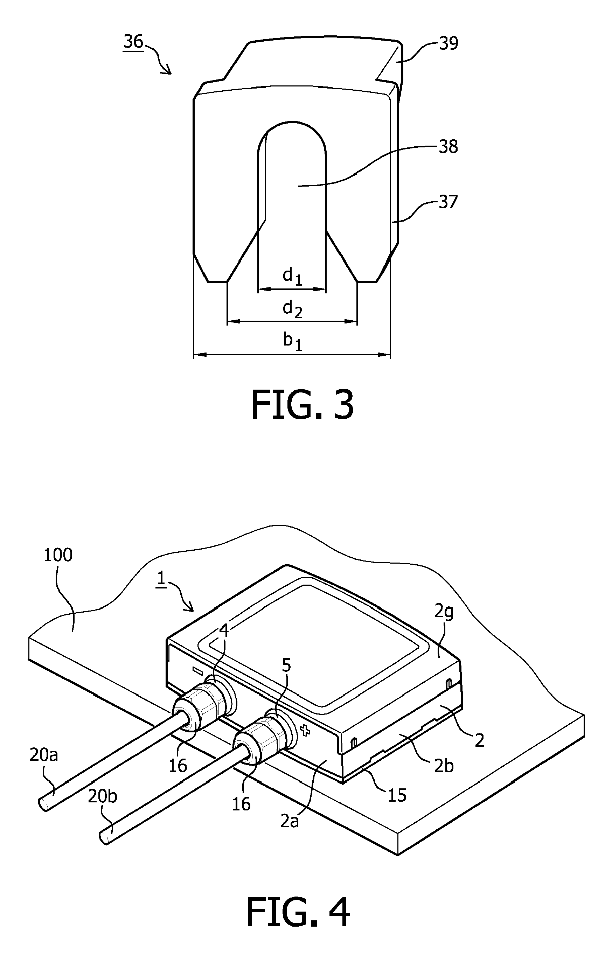

Referring to figure 1a, junction box 1 is shown from its underside. Junction box 1 comprises a housing 2 constructed from wall parts 2a,2b,2c,2d. Housing 2 comprises an underside 2e and an upper side 2f and encloses a space 3. Two openings 4,5 are located in wall part 2a. Two clamping elements 6 are also connected to wall part 2a by means of a material bridge, this also being shown in figure 2. Housing 2 comprises recesses 7 on underside 2e of housing 2 and recesses 8 on the upper side of housing 2 (see figure 1b) for connecting to the wall parts a cover with which space 3 can be closed (see figure 4). Housing 1 is manufactured together with clamping elements 6 by means of injection moulding from the plastic polyphenylene oxide (PPO). The cover is preferably also manufactured by injection moulding from this material.

Referring to figure 1b, a junction box 1 is shown from its upper side. Guide pins 9 and fixing means 10 embodied as barb can be seen in this figure. A printed circuit board 11 is pushed over guide pins 9, this printed circuit board 11 resting on a support surface (not shown), wherein printed circuit board 11 is situated under barb 10 and is clamped fixedly by barb 10.

Connecting cables 20a, 20b extend through openings 4, 5 respectively, wherein the cores 20c, 20d are connected to contacts 12a, 12b of printed circuit board 11 by means of plugs 20e, 20f. These are cables each having a single core. It will be apparent that the invention can likewise be applied with multi-core cables. Arranged in wall part 2a close to openings 4, 5 are grooves 13 which are accessible on upper side 2f through access openings 13a. The clamping elements 6 detached from housing 2 can now be placed round connecting cables 20a 20b and clamped onto connecting cables 20a,20b as according to arrows P1. Clamping elements 6 received round connecting cables 20a,20b can then be placed with their tongues 6a into grooves 13, as shown in figure 1c. It must further be noted that printed circuit board 11 comprises a contact 11a for bringing about an electrical connection with contacts of an electrical device, such as a solar panel.

Figure 2 shows a top view of junction box 1 of figure 1. Shown here are support surfaces 14 for supporting a printed circuit board 11 connected to housing 2, as well as grooves 13.

Figure 3 shows a clamping element 36. Clamping element 36 is constructed from a first wall part 37, which is provided with a non-enclosed opening 38, and a second wall part 39 extending at an angle of about 90 °relative to the first wall part. The non-enclosed opening 38 has a portion with a thickness d1 which is smaller than the thickness of connecting cables 20a,20b shown in figure 1c, and a portion with a tapering width, the largest width d2 of which is greater than the thickness of connecting cables 20a,20b.

Wall part 39, which is provided with protruding tongues, has a width b1 such that the tongues of wall part 39 can be received in grooves 13. It is noted that this makes it possible to clamp clamping element 36 round cable 20 and to fix clamping element 36 onto wall part 2a of housing 2 in a single movement. The clamping element 36 preferably manufactured from PPO is formed simultaneously with the housing during the injection moulding process and is to some extent flexible. Because side walls 37a of opening 38 are chamfered, the flexibility is further increased and sliding onto the cable is facilitated. If desired, the material properties and the shaping of the opening and side walls 37a can be modified in order to obtain a desired clamping force of clamping body 6 round cables 20a,20b. Fibres can thus be added to the plastic prior to the injection moulding process, and the diameter d1 can be increased or decreased.

Figure 4 shows a detail of a solar panel (also referred to as photovoltaic cell) 100 to which a junction box 1 according to the invention is connected. Contact 11a of printed circuit board 11 is here connected in electrically conductive manner to a contact (not shown) of solar panel 100. A cover 2g is placed on wall parts 2a,2b,2c,2d of housing 2, which cover 2g closes the upper side of junction box 1 in liquid-tight manner. Wall parts 2a,2b,2c,2d are connected here by means of a screw connection between the printed circuit board received in the junction box and a contact element arranged on solar panel 100, wherein the transition between wall parts 2a,2b,2c,2d and solar panel 100 is finished with a mastic edge 15. Owing to the mastic edge 15 no liquid can penetrate into the interior of junction box 1.

Per se known glands 16 are placed around cables 20a,20b for liquid-tight sealing of the openings 4,5 through which cables 20a,20b extend. Cables 20a,20b are connected to the mains supply by a coupling circuit (not shown in the drawing). It is noted here that a number of solar panels are usually connected to each other in series, wherein the cables serve to mutually connect adjacent solar panels.

## Claims

1. Junction box for enclosing an electrically conductive connection of at least one connecting cable to electrical connecting means present in the housing, comprising:
- a housing provided with at least one passage opening for passage of the connecting cable into the interior of the housing and an access opening for providing access to the interior of the housing for the purpose of connecting the at least one connecting cable to the connecting means,
**characterized in that** the device comprises at least one clamping element which is adapted, when placed on the part of the at least one connecting cable extending inside the junction box, to absorb tensile forces exerted on the part of this connecting cable situated outside the junction box.

2. Junction box as claimed in claim 1, **characterized in that** the clamping element is provided with a non-enclosed opening for clamping attachment to the connecting cable.

3. Junction box as claimed in claim 2, **characterized in that** the non-enclosed opening comprises a portion with a width smaller than the diameter of the connecting cable.

4. Junction box as claimed in claim 2 or 3, **characterized in that** the non-enclosed opening comprises close to an edge of the clamping element a portion with a width greater than the diameter of the connecting cable.

5. Junction box as claimed in claim 2, 3 or 4, **characterized in that** the thickness of the edge adjacent to the opening is smaller than that of the other part of the clamping element.

6. Junction box as claimed in any of the foregoing claims, **characterized in that** the at least one clamping element can be coupled to the inner side of a wall of the junction box.

7. Junction box as claimed in claim 6, **characterized in that** the at least one clamping element can be connected to the wall by means of a form-locking connection which can be fixed by a movement of the clamping element substantially parallel to the wall of the junction box.

8. Junction box as claimed in claim 6 or 7, **characterized in that** the clamping element is provided on two opposite sides with tongues which can be engaged by grooves arranged in the wall or in parts connected thereto on either side of the at least one passage opening and extending parallel to each other.

9. Junction box as claimed in any of the foregoing claims, **characterized in that** the junction box is provided with two passage openings, and that the connecting means form part of a circuit which is arranged in the interior of the housing and which is adapted for connection by the connecting means to two connecting cables.

10. Junction box as claimed in any of the foregoing claims, **characterized in that** the junction box is provided with a connecting opening arranged opposite the access opening, and that the junction box is adapted for placing with its connecting opening on an electrical apparatus.

11. Junction box as claimed in claim 10, **characterized in that** the junction box is provided with contact means for connecting the electrical circuit to contacts arranged on the electrical apparatus and with fixation means for fixing the junction box to the electrical apparatus.

12. Junction box as claimed in any of the foregoing claims, **characterized in that** the junction box is adapted for placing on a photovoltaic panel.

13. Junction box as claimed in any of the foregoing claims, **characterized in that** the at least one clamping element is formed integrally with the housing.

14. Junction box as claimed in claim 14, **characterized in that** the at least one clamping element is formed on the inner side of the housing.

15. Mould adapted to manufacture a junction box as claimed in any of the foregoing claims, **characterized in that** the mould comprises recesses for receiving mouldable material for the purpose of forming the housing and the clamping means.
